# EUROPEAN PATENT APPLICATION

(11) **EP 1 785 967 A1**
(43) Date of publication of application: **16.05.2007**
(21) Application number: 06006862.4
(22) Date of filing: 31.03.2006
(51) Int. Cl.: G09B 19/00, H04B 1/20

(54) **A learning method of a remote controller**

(30) Priority: 10.11.2005 CN 200510115882
(71) Applicant: Cheertek Inc., Hsinchu 300 (TW)
(72) Inventor: Tseng, Ming-Chin, Hsinchu 300, Taiwan (CN)
(74) Representative: Strehl Schübel-Hopf & Partner

(57) **Abstract**

A learning method of a remote controller applicable in an electric appliance is disclosed including the following steps: providing a plurality of built-in key codes in a controlled end of an electric appliance; providing users with an operation interface through which users send a specific key code from a new infrared remote controller, and the controlled end displaying the operation interface on a display screen when the specific key code can be identified by the controlled end; users transmitting key codes of the new controller to the controlled end one by one; the controlled end saving the key codes received in its memory device; and the controlled end receiving and saving all the key codes of the new remote controller such that the appliance can be controlled by the new remote controller.

## Description

### FIELD OF THE INVENTION

The present invention relates to a learning method of a remote controller, and particularly to a built-in function of an electric appliance for the learning of a remote controller, which users can use keys of an infrared receiver of an on-screen display (OSD), a video screen or other audio/video device (LED, LCD, Audio, and others) as an operation interface to transmit the new key codes of a new remote controller to the original electric appliance, such that the original electric appliance can be controlled by the new remote controller.

### BACKGROUND OF THE INVENTION

Common electric appliances (TV, DVD player, or digital set top box, for example) are remotely controlled by remote controllers with an infrared (IR) transmitter. The transmitter of a remote controller modulates and then transmits a specific key code through IR. On the other hand, an IR receiver in the controlled end will then de-modulate the command into the original key code, which is compared against with the built-in key code. If consistent, the appliances will be controlled by the remote controller, and vice versa. Nowadays, a great majority of electric appliances are controlled with remote controllers. Once their original remote controllers are lost and same type of remote controllers cannot be purchased again, the use of these appliances will be impossible or at least inconvenient.

There is a universal remote controller in the market to overcome the shortcoming of the conventional remote controller. The universal controller is provided with built-in key codes of common brands of electric appliances. Users need to use a specific key (power key, for example) of the universal remote controller to conduct the comparison by sending its built-in key codes one by one to the controlled end. When the controlled end responds to one of these built-in key codes, the remote controller knows the electric appliance's key code, which will be saved for future operation.

ROC Patent No. 531983 (application date: Nov. 12, 2001; approval date: May 11, 2003), for example, discloses a software learning method of a remote-control device, in which the remote-control device comprises a receiving end and a remote controller which are connected by a wireless transmission protocol. The receiving end is coupled with an end device and the remote controller further comprises a remote controller serial number. The method can be described as follows: the receiving end stands by to receive the data packet containing the serial number of the remote controller; the remote controller sends out a data packet containing the serial number of the remote controller through the wireless transmission protocol, and; the receiving end receives the data packet and in turn get the serial number of the remote controller. Also, the wireless transmission protocol is the Bluetooth wireless transmission protocol. The patent described discloses a software learning method operated in a computer with the Bluetooth wireless transmission protocol. Since the Bluetooth wireless transmission technology is a point-to-point protocol, every remote controller needs to have a serial number for the receiving end to conduct identification. However, the remote controller of a common TV, DVD player, or digital set top box is operated by IR transmission. Consequently, the patent described does not solve the problem of the conventional remote controller.

### SUMMARY OF THE INVENTION

It is an object of the present invention to provide a learning method of a remote controller. Electric appliances are provided with a built-in function for the learning of a remote controller, with which users can use keys of an infrared receiver, such as on-screen display (OSD), video screen or other audio/video device (LED, LCD, Audio, and others), as an operation interface to transmit the coding of a new remote controller to original electric appliances, such that the original electric appliances can be controlled by the new remote controller.

It is an object of the present invention to provide a learning method of a remote controller applicable in electric appliances, including the following steps: providing a plurality of built-in key codes in a controlled end of an electric appliance; providing users with an operation interface through which users send a specific key code from a new infrared remote controller, and the controlled end displaying the operation interface on a display screen when the specific key code can be identified by the controlled end; users transmitting key codes of the new controller to the controlled end one by one; the controlled end saving the key codes received in its memory device; and the controlled end receiving and saving all the key codes of the new remote controller such that the appliance can be controlled by the new remote controller.

### BRIEF DESCRIPTION OF THE DRAWINGS

The present invention can be more fully understood by reference to the following description and accompanying drawings, in which:

FIG. 1 is a flow chart for a learning method of a remote controller in accordance with one embodiment of the present invention;

FIG.2 is a schematic illustration of an operation interface in accordance with one embodiment of the present invention;

FIG. 3 is a schematic illustration of a dialog box in accordance with one embodiment of the present invention; and

FIG. 4 is a schematic illustration of the operation procedure of a controlled end in accordance with one embodiment of the present invention.

### DETAILED DESCRIPTION OF THE INVENTION

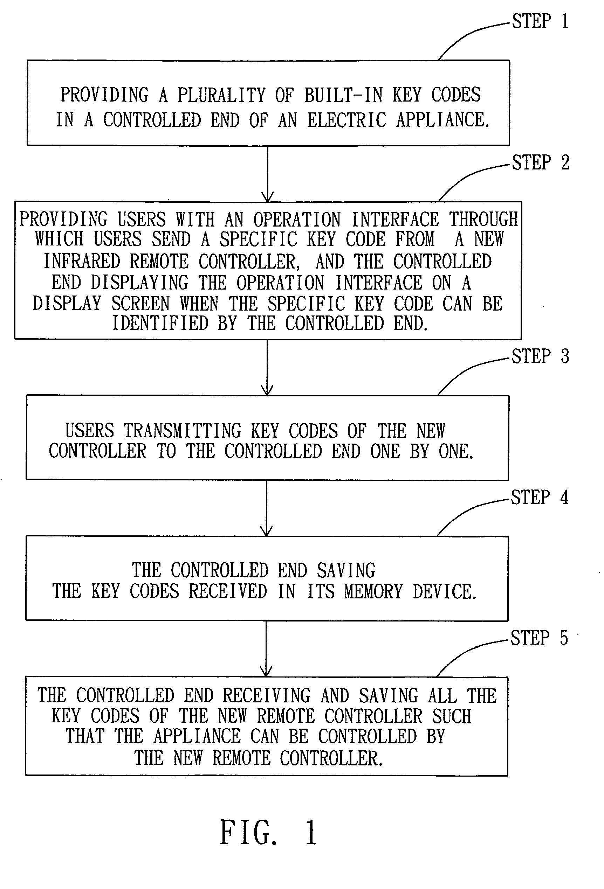

FIG. 1 is a flow chart for a learning method of a remote controller in accordance with one embodiment of the present invention. Referring to Fig.1, the learning method of a remote controller in accordance with one embodiment of the present invention applicable in electric appliances includes the following steps: providing a plurality of built-in key codes in a controlled end of an electric appliance (step 1); providing users with an operation interface through which users send a specific key code from a new infrared remote controller, and the controlled end displaying the operation interface on a display screen when the specific key code can be identified by the controlled end (step 2); users transmitting key codes of the new controller to the controlled end one by one (step 3); the controlled end saving the key codes received in its memory device (step 4); and the controlled end receiving and saving all the key codes of the new remote controller such that the appliance can be controlled by the new remote controller (step 5).

In step 1, the electric appliance can be, for example, but not limited to, a TV, a digital audio/video player, or a digital set top box. Also, its controlled end is provided with a plurality of built in key codes of common brands of electric appliances, such as NEC, Toshiba, Sony, Panasonic, Philip, and so on. In case the original remote controller is lost, users can buy a new remote controller applicable to the brands described above and employ the method in accordance with one embodiment of the present invention to remotely control the appliance.

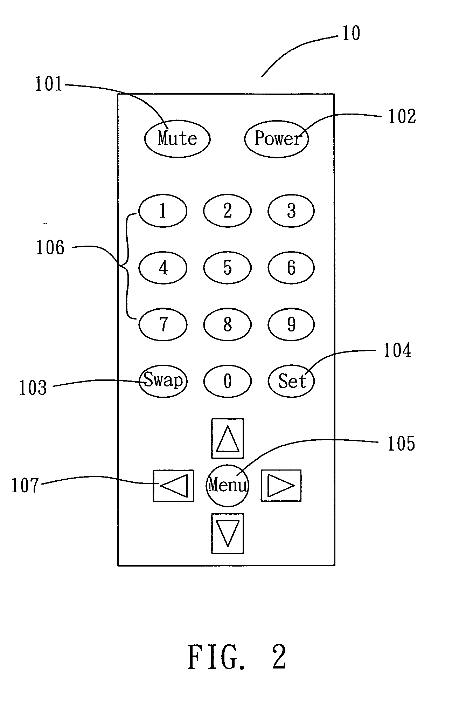

In the step 2, when users send a specific key code from the new infrared remote controller and the specific code can be identified by the controlled end, the controlled end will display an operation interface (shown in FIG. 2) on a display screen, wherein the specific key code is the Power key or other combination of keys and the display screen is a TV screen or a built-in screen of a digital audio/video player.

In step 3, users transmit the key codes of the new controller to the controlled end one by one to complete the learning process.

In step 4, the controlled end saves the key codes received in its memory device one by one and the key codes are called smart codes which can be accessed and compared, wherein the storage device is an electrically erasable programmable read only memory (EEPROM), flash memory, or other memory.

In step 5, when the controlled end receives and saves all key codes of the new remote controller, the learning of the remote controller is completed and the appliance can be controlled by the new remote controller.

FIG. 2 is a schematic illustration of the operation interface in accordance with one embodiment of the present invention. Referring to FIG. 2, the operation interface can display a remote controller 10 on the display screen and the remote controller 10 is provided with keys of Mute 101, Power 102, Swap 103, Set 104, Menu 105, 0∼9 numbers 106, and up, down, left, and right 107. When transmitting the key codes of the new controller to the controlled end one by one in the step 3 described above, users can use the conventional keys 101~107 on the operation interface 10 to conduct "jump" or "escape" during the process.

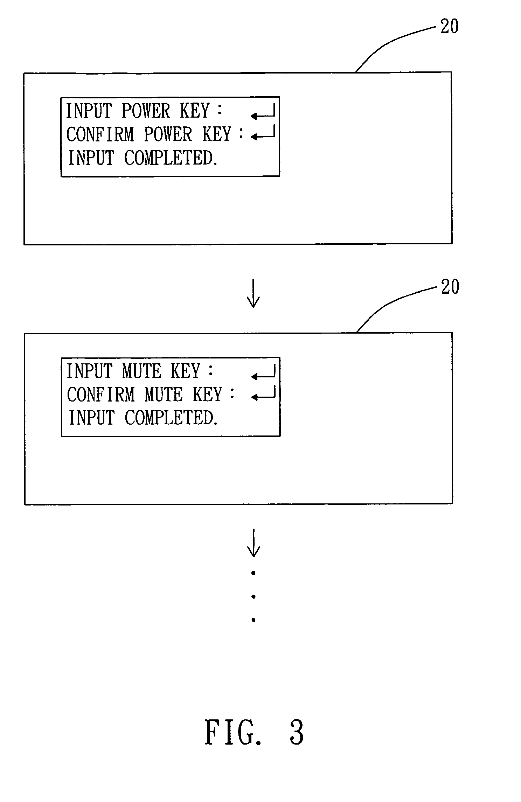

FIG.3 is a schematic illustration of a dialog box in accordance with one embodiment of the present invention. Referring to FIG. 3, in the step 3 of the learning method of a remote controller in accordance with one embodiment of the present invention, in which users transmit the key codes of the new controller to the controlled end one by one, the display screen will display a dialog box 20, which is located on one side of the operation interface 10 and the dialog box 20 further comprises "input XX key" (input Power key, for example), "confirm XX key" (confirm Power key, for example), and "input completed." Therefore, under the guidance of the dialog box 20, users can conveniently use the keys of Mute 101, Power 102, Swap 103, Set 104, Menu 105, 0∼9 numbers keys 106, and up, down, left, and right 107 to complete the learning of the new remote controller.

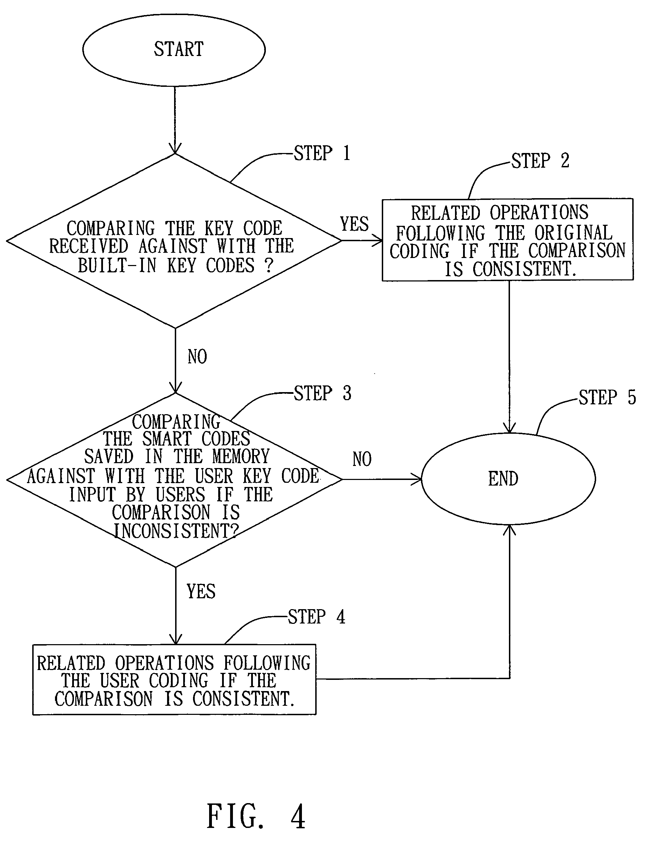

FIG. 4 is a schematic illustration of the operation procedure of the controlled end in accordance with one embodiment of the present invention. Referring to FIG. 4, when the controlled end receives a key code from a remote controller, the operation procedure includes the following steps: comparing the key code received against with the built-in key codes (step 1); related operations following the original coding if the comparison is consistent, (step 2); comparing the smart codes saved in the memory against with the user key code input by users if the comparison is inconsistent, (step 3); related operations following the user coding if the comparison is consistent, (step 4); and ignoring the key code if the comparison is inconsistent (step 5).

In the step 2, if the comparison is consistent, the key code is emitted from the original remote controller. Therefore, the controlled end will conduct related operations according to the original coding.

If the step 3, if the comparison is inconsistent, the key code is emitted from a new remote controller and the smart codes saved in the memory will be compared against with the user key code input by users.

In the step 4, if the comparison is consistent, the key code of the new remote controller is saved in the memory and can be identified. Therefore, the controlled end will conduct related operations with the user coding.

In the step 5, if the comparison is inconsistent, the remote controller is not the original one and the key code of the new remote controller cannot be identified. Therefore, the key code will be ignored.

A learning method of a remote controller in accordance with one embodiment of the present invention, as described above, relates to electric appliances with a built-in function for the learning of a remote controller, with which users can use keys of an infrared receiver, which is accompanied with, for example, a on-screen display (OSD), a video screen or other audio/video device (LED, LCD, Audio, and others), as an operation interface to transmit the new codes of a new remote controller to original electric appliances, such that the original electric appliances can be controlled by the new remote controller. The advantage of the new method has indeed improved the shortcoming of conventional remote controllers.

While the invention has been described with reference to the a preferred embodiment thereof, it is to be understood that modifications or variations may be easily made without departing from the spirit of this invention, which is defined by the appended claims.

## Claims

1. A learning method of a remote controller applicable in an electric appliance, comprising the following steps:
providing a plurality of built-in key codes in a controlled end of an electric appliance;
providing users with an operation interface through which users send a specific key code from a new infrared remote controller, and the controlled end displaying the operation interface on a display screen when the specific key code can be identified by the controlled end;
users transmitting key codes of the new controller to the controlled end one by one;
the controlled end saving the key codes received in its memory device; and
the controlled end receiving and saving all the key codes of the new remote controller such that the appliance can be controlled by the new remote controller.

2. The method of claim 1, wherein the electric appliance is a TV, a digital audio/video player, or a digital set top box.

3. The method of claim 1, wherein the storage device is an electrically erasable programmable read only memory (EEPROM), flash memory, or other memory.

4. The method of claim 1, wherein the operation interface can display a remote controller on the display screen and the remote controller is provided with keys of Mute, Power, Swap, Set, Menu, 0∼9 number, and up, down, left, and right.

5. The method of claim 1, wherein the specific key code is the Power key or other combination of keys.

6. The method of claim 1, wherein the display screen is a TV screen or a built-in screen of a digital audio/video player.

7. The method of claim 1, wherein when transmitting the key codes of the new controller to the controlled end one by one, users can use the conventional keys on the operation interface to conduct "jump" or "escape" during the process.

8. The method of claim 1, wherein when users transmit the key codes of the new controller to the controlled end one by one, the display screen will further display a dialog box, which includes "input XX key", "confirm XX key," and "input completd," to serve as a guide for users.
